Europäisches Patentamt

(19) European Patent Office

Office européen des brevets

(11) Publication number: **0 433 097 A1**

(12) # EUROPEAN PATENT APPLICATION

(21) Application number: **90313738.8**

(22) Date of filing: **17.12.90**

(51) Int. Cl.⁵: **C08K 3/22, C08L 33/18, C08L 51/04**

(30) Priority: **15.12.89 JP 323959/89**

(43) Date of publication of application:
**19.06.91 Bulletin 91/25**

(84) Designated Contracting States:
**CH DE FR GB IT LI NL SE**

(71) Applicant: **MITSUI TOATSU CHEMICALS, Inc.**
**2-5 Kasumigaseki 3-chome**
**Chiyoda-Ku Tokyo 100 (JP)**

(72) Inventor: **Yasumoto, Hiroshige**
**4-8-13 Shoji Higashi**
**Ikuno-ku, Osaka-shi 544 (JP)**
Inventor: **Naemura, Shinichi**
**1-16-5 Nakazato, Minami-ku**
**Yokohama-shi, Kanagawa-ken 232 (JP)**
Inventor: **Hayafune, Koji**
**1-13-15 Eifuku**
**Suginami-ku, Tokyo 168 (JP)**
Inventor: **Amemiya, Hideo**
**2882 Iijima-cho, Sakae-ku**
**Yokohama-shi, Kanagawa-ken 244 (JP)**

(74) Representative: **Hutchins, Michael Richard et al**
**Graham Watt & Co. London Road Riverhead**
**Sevenoaks, Kent TN13 2BN (GB)**

(54) **Transparent resin composition.**

(57) A transparent resin composition essentially consisting of a thermoplastic resin, preferably a high nitrile resin having a high water absorption rate, and 1% to 5% by weight of far infrared radiative ceramics.

The resin composition is suited for the production of vessels for packing water or beverages.

EP 0 433 097 A1

# TRANSPARENT RESIN COMPOSITION

The present invention relates to a transparent resin composition comprising far infrared radiative ceramics, and more particularly relates to transparent resin compositions suited for the production of vessels for holding drinking water and beverages.

## BACKGROUND OF THE INVENTION

Much attention has recently been focussed on drinking waters and in particular on the so-called "delicious water" (which is generally mineral water).

Various investigations have been carried out on "delicious water" by the research institutes of the Ministry of Health and Welfare and the National Land Office. As a result, the "delicious water" has been found to contain carbon dioxide, oxygen and minerals.

It is assumed that carbon dioxide dissolved in the water makes the water acidic and gives the water a fresh and delicious feeling ; oxygen gives a refreshing taste ; and minerals such as calcium and magnesium, which give an astringent or bitter taste in too high a concentration, or a flat taste in too low a concentration, improve the taste at appropriate concentrations.

The "delicious water" which contains these minerals and is now marketed in Japan amounts to several dozens of grades including both domestic and imported products. However, the unit volume price of the "delicious water" is considerably higher than that of the usual city water.

On the other hand, household drinking water, ie city water, has conventionally been obtained by filtration and bactericidal treatment of raw water which is composed substantially of river water. The city water, however, has problems such as malodour due to contamination in the raw water or the residual odour of the hypochlorite used in order to bring the water quality up to the appropriate standard for city water. Thus, the city water is not "delicious" at all.

Consequently, in order to render "delicious water suitable for drinking in the household, impurities, bacteria, fungi and hypochlorite odour must be removed by passing the city water through a filter equipped with an activated carbon layer or a permeable membrane in the form of hollow fibres, or by boiling and then cooling.

When water is cooled in a refrigerator in order to increase the "delicious" feeling of the water, the water must be preserved in a transparent or translucent bottle made of glass or plastics so as to retain a "delicious" and refreshing appearance. In cases where materials having low impact strength, such as glass, are used, care must be taken to prevent breakage.

Ceramics consisting of a certain kind of metal compound and complexes thereof are known to emit far infrared radiation having a wavelength of 3 m or more, particularly from 4 to 25 m.

The far red infrared radiation of ceramics has conventionally been utilized for heating, drying and sterilization at high-temperature. Recently, however, attention has been focussed on the use of ceramics at around room temperature, and various kinds of products are now being marketed for such use.

Resin compositions obtained by incorporating these ceramics have also been proposed but such compositions have tended to be opaque. A resin composition which functions such that water quality is naturally improved by the effect of far infrared radiation when drinking water is preserved in a container prepared from the resin composition, has not yet been proposed.

## BRIEF DESCRIPTION OF THE INVENTION

An object of the present invention is to provide a resin composition which is a substantially transparent resin composition and is suitable as a material from which may be made a vessel which is capable of naturally modifying the quality of water preserved therein, to afford "delicious water".

The abovementioned object of the invention can be accomplished by providing a transparent thermoplastic resin composition containing far infrared radiative ceramics.

The term "containing far infrared radiative ceramics" as used herein means that particles of the far infrared radiative ceramics are disposed in the interior and/or on the surface of an article constituted by the thermoplastic resin.

Accordingly, the far infrared radiative ceramics are dispersed in the interior or coated on the surface of the resin composition.

## DETAILED DESCRIPTION OF THE INVENTION

Exemplary far infrared radiative ceramics for use in the present invention include fine ceramic powders radiating far infrared radiation having a wavelength of from 4 to 25 µm.

The fine ceramic powders include, for example, oxides of metals such as aluminum, silicon, titanium, magnetium and zirconium and a mixture of these oxides.

Preparation of the transparent vessel by using the resin composition may be carried out by moulding a main body with a thermoplastic resin containing no ceramics, followed by coating the surface of the main body with ceramics in accordance with usual procedures. However, a more durable effect is obtained by kneading the ceramics into the resin and thereafter moulding the resin composition thus obtained.

The method for preparing the resin composition containing the ceramics includes, for example, a method for mixing the ceramic fine powder and a high nitrile resin on hot rolls by melting the resin, and a method for kneading in an extruder.

In these methods, the amount of the ceramics is generally from 1 to 5%, preferably from 1.5% to 4.5% by weight of the resin and no particular limitation is imposed upon the amount so long as transparency is not significantly impaired.

When the content of the ceramics is less than 1%, the amount of far infrared radiation radiated therefrom is too small and the beneficial effect of the ceramics cannot be observed. On the other hand, when the content exceeds 5%, there is a decrease in processability and strength, and additionally formation of a transparent and visually pleasing resin is inhibited.

As an alternative method, the ceramic powder is heated to a high temperature and scattered on one surface of a synthetic resin sheet containing no ceramics. The resulting sheet having ceramics adhered thereon can be cut and hot-pressed to form a desired shape.

When a vessel is prepared from the sheet thus obtained, it is recommended to constitute the vessel so as to arrange the ceramic-rich surface inside.

The resins which can be used for the present invention typically are hygroscopic resins such as styrene base resin, acrylic base resin, cellulose base resin, polyamide base resin, polyolefin base resin, nylon, polyurethane, nitrile base resin and mixtures of these resins. Particularly preferred hygroscopic resins have a water absorption capability of 0.1% or more when measured in accordance with ASTM D-570.

Thermally resistant resins such as aramide resin, polyetherether ketone and polyether sulfone are recommended among the hygroscopic resins in view of giving no adverse effect on the irradiation of the far red infrared radiation.

Important hygroscopic resins include, for example, high nitrile resin, nitrile base copolymer, polymethyl methacrylate, polyphenyl sulfone, polycarbonate, polyacetal, nylon-6, nylon-66, polyethylene terephthalate, vinyl chloride base resin and polyurethane resin. A particularly preferred resin is a high nitrile resin which is a copolymer containing 50% by weight or more of an unsaturated nitrile compound. A further preferred resin is a copolymer of an unsaturated nitrile compound and styrene, butadiene, isoprene, methyl acrylate, ethyl acrylate, methyl methacrylate, ethyl methacrylate or a mixture of these monomers. Another preferred resin is a high nitrile resin which is a mixture of at least one rubbery polymer selected from the group consisting of a butadiene-acrylonitrile copolymer, butadiene-styrene copolymer, isoprene-styrene copolymer, polybutadiene and polyisoprene with a copolymer containing an unsaturated nitrile compound as a main component. Still another preferred resin is a high nitrile resin obtained by copolymerising a mixture of an unsaturated nitrile compound and a monomer such as styrene, butadiene, isoprene, methyl acrylate, ethyl acrylate, methyl methacrylate and ethyl methacrylate in the presence of a rubbery polymer such as butadiene-acrylonitrile copolymer, butadiene-styrene copolymer, isoprene-styrene copolymer, polybutadiene and polyisoprene.

As a result of overall evaluation, the most preferred resin is a copolymer containing an unsaturated nitrile compound such as acrylonitrile and methacrylonitrile as a principal component, and is a high nitrile resin containing the unsaturated nitrile unit in an amount of 50% by weight or more, preferably 55% by weight or more.

Comonomers which can be used include styrene, butadiene, isoprene, methyl acrylate, ethyl acrylate, methyl methacrylate and ethyl methacrylate. At least one of the comonomers is copolymerized with the unsaturated nitrile compound.

Exemplary high nitrile resins include a material obtained by blending rubbery copolymers such as a butadiene-acrylonitrile copolymer, butadiene– styrene copolymer, isoprene-styrene copolymer, polybutadiene and polyisoprene so as to obtain the above content of the unsaturated nitrile unit, and a material obtained by copolymerizing the mixture of the unsaturated nitrile compound and the above comonomer in the presence of the rubbery copolymer. The high nitrile resin thus obtained is preferred due to a good impact resistance

The high nitrile resin may contain antioxidant, an ultraviolet absorber, an antistatic agent, a lubricant, an inorganic filter, a colourant and/or a small amount of another resin.

The resultant thermoplastic resin compound comprising the far red infrared radiative ceramics is processed by conventional methods to prepare a transparent vessel.

It is preferred to constitute the transparent vessel so that the ceramic powder is present in a high density on the inside surface of the vessel.

The resultant thermoplastic resin composition comprising the far infrared ceramics is molded into a bottle by common methods such as injection moulding or blow moulding.

The bottle thus obtained is useful for containing and preserving fruit juice, fruit wine and other beverages.

The resultant thermoplastic resin composition comprising the far infrared radiative ceramics can be processed by common methods to prepare a transparent vessel capable of naturally improving the quality of drinking water during preservation.

In the preparation of the vessel, it is preferred to constitute the vessel so that the ceramic powder is present in a high density on the inside surface of the transparent vessel.

Common moulding methods such as injection moulding or blow moulding can be employed for processing the high nitrile resin composition comprising the far infrared radiative ceramics of the present invention.

The resin composition of the present invention is also useful as a material for forming vessels for containing and preserving fruit juice, fruit wine and other beverages.

EXAMPLES

Three resin compositions containing different concentration of ceramics material were prepared by mixing a high nitrile resin BAREX (Trade Mark of Mitsui Toatsu Chemicals Inc.) and either 1.5% or 4.5% or 5.0% by weight of a ceramic powder (Sanki Bussan Co. Ltd.) containing aluminium oxide, silicon oxide, calcium oxide and iron oxide as the main components and melt— kneading the mixture at 210°C in a twin screw extruder of 30 mm in diameter.

The three resin compositions thus obtained were each processed by blow moulding to yield cylindrical bottles having a height of 190 mm, a diameter of 70 mm, a shell wall thickness of about 0.5 mm and an internal volume of about 500 cm.

Each of the bottles thus obtained was transparent. Specimens were cut from the shell portion of the bottles, and the haze ratings of the cut specimens were measured in accordance with JIS-K-6714. The results are shown in the following table

| Specimen No. | Blended Concentration of Ceramics % | Haze % |
|---|---|---|
| 1 | 1.5 wt% | 4% |
| 2 | 4.5 wt% | 8% |
| 3 | 5.0 wt% | 10% |

Oolong tea and coffee were made by using city water. City water, oolong tea and coffee were respectively poured into each bottle, sterilized and sealed with a plastic film in accordance with usual procedures.

As a comparative example, the same type of transparent bottle was prepared from the resin containing no ceramics. The same kinds of liquid as used in the example were respectively poured into each bottle and sealed by the same procedures as described in the example above.

After storage periods of 24 hours and one week, respectively, several bottles in each test group were unsealed and subjected to a drinking test. The results of a comparison of city water, oolong tea and coffee which had been preserved in the bottle of the invention were that the hypochlorite odour was eliminated and the taste was enhanced. However, samples from the test described in the comparative example had residual hypochlorite odour and decreased taste.

By using the resin composition of the present invention, city water, tea, coffee, fruit juice, "sake", fruit wine and other beverages, and foods such as stewed beef and curried pork can be preserved for a long period while increasing the taste. Hence, the present invention is very valuable.

## Claims

1. A transparent resin composition essentially consisting of a thermoplastic resin containing far infrared radiative ceramics.

2. A transparent resin composition of claim 1 wherein the resin used is a high nitrile resin.

3. A transparent resin composition of claim 2 wherein the high nitrile resin is a copolymer containing 50% by weight or more of an unsaturated nitrile compound.

4. A transparent resin composition of claim 1, 2 or 3 wherein the resin used is a hygroscopic resin having a water absorption of 0.1% or more when measured in accordance with ASTM D-570

5. A transparent resin composition according to any one of claims 2 to 4 wherein the high nitrile resin is a mixture of at least one rubbery polymer selected from the group consisting of a butadiene-- acrylonitrile copolymer, butadiene-styrene copolymer, isoprene-styrene copolymer, polybutadiene and polyisoprene, with a copolymer essentially consisting of the unsaturated nitrile compound.

6. A transparent resin composition according to any one of claims 2 to 5 wherein the high nitrile resin is a copolymer obtained by copolymerizing a mixture of at least one monomer selected from the group consisting of styrene, butadiene, isoprene, methyl acrylate, ethyl acrylate, methyl methacrylate and ethyl methacrylate, with the unsaturated nitrile compound in the presence of at least one rubbery polymer selected from the group consisting of a butadiene-acrylonitrile copolymer, butadiene-styrene copolymer, isoprene-styrene copolymer, polybutadiene and polyisoprene.

7. A transparent resin composition according to any one of claims 2 to 6 wherein said resin composition contains 1% to 5%, preferably 1.5% to 4.5%, by weight of the infrared radiative ceramics.

8. A transparent resin as defined in any one of the preceding claims wherein the far infrared radiative ceramics are selected from the oxides of aluminium, silicon, titanium, magnesium, zirconium and mixtures thereof.

9. A container, such as a bottle, formed from a transparent resin composition as defined in any one of the preceding claims.

10. A food product comprising a container as defined in claim 9 and, contained therein, a beverage such as water, tea, coffee, fruit juice, "sake" or fruit wine ; or a food such as stewed beef or curried pork.

**European Patent Office**

## EUROPEAN SEARCH REPORT

Application Number

EP 90 31 3738

### DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| P,X | EP-A-387356 (MITSUI TOATSU CHEMICALS INC.) * claims; examples 1, 4 * | 1-10 | C08K3/22 C08L33/18 C08L51/04 |
| X | DATABASE WPIL, no. 90-027452, Derwent Publications Ltd., London, GB; & JP-A-1 306 607 (JAPAN EXLAN CO., LTD.) 11-12-1989 * abstract * | 1-8 | |
| X | DATABASE WPIL, no. 89-211911, Derwent Publications Ltd., London, GB; & JP-A-1 150 527 (ASAI K.) 13-06-1989 * abstract * | 1 | |

TECHNICAL FIELDS SEARCHED (Int. Cl.5)

C08K
C08L

The present search report has been drawn up for all claims

| Place of search | Date of completion of the search | Examiner |
|---|---|---|
| THE HAGUE | 19 MARCH 1991 | DE LOS ARCOS Y E. |